# EUROPEAN PATENT SPECIFICATION

(11) **EP 2 999 581 B1**
(45) Date of publication and mention of the grant of the patent: **30.08.2017**
(21) Application number: 14725741.4
(22) Date of filing: 23.05.2014
(51) Int. Cl.: B29C 51/22, B29C 51/26, B29L 31/00, B29C 51/08

(54) **METHOD AND DEVICE FOR THERMOFORMING PLASTICS**
VERFAHREN UND VORRICHTUNG ZUM THERMOFORMEN VON KUNSTSTOFFEN
PROCÉDÉ ET DISPOSITIF DESTINÉS AU THERMOFORMAGE DE PLASTIQUES

(30) Priority: 23.05.2013 BE 201300359
(43) Date of publication of application: 30.03.2016
(73) Proprietor: Darvan Invest N.V., 8850 Ardooie (BE)
(72) Inventor: DENEIRE, Michel, B-8850 Ardooie (BE)
(74) Representative: DenK iP
(86) International application number: PCT/EP2014/060745
(87) International publication number: WO 2014/187994

(56) References cited:
- GB-A- 1 500 961
- US-A- 5 167 969
- US-A- 6 086 354
- US-B1- 7 481 640

## Description

The invention relates to a device and a method for thermoforming plastics, more specifically plastic sheets and films, to form spatial objects, such as receptacles.

### FIELD OF THE INVENTION

Thermoforming three-dimensional plastic products in moulds starting from flat plastic films or sheets and in a continuous or semi-continuous process is generally known. It is also known that the actual moulding step in the mould is the slowest step in the deforming process of supplying the flat structures to the device and, via heating steps, deforming in the mould and removal of the moulded object. In order to increase the yield of the device, it is now customary to produce a plurality of spatial objects from a large sheet or film from roll, simultaneously in one large mould during the forming step. However, the large mould requires the supply of a large amount of energy for preheating the sheets and for building up the required level of pressure and/or vacuum in the mould. In addition, a superfluous amount of plastic sheet has to be heated inbetween and around the plurality of objects which are moulded simultaneously, which cannot be subsequently recovered, or only with difficulty, and thus in other words is lost as waste. This is a crucial drawback, since expensive plastics are often used, such as PC, PEI, PS, PES, CPET, biodegradable plastics etc. Finally, it is very difficult to achieve even heating across the entire large film, as the outer edges of the film stay colder than the central zone. Usually, there are also pressure differences in the forming station between the edge zones of the mould and the central zone. It is thus often difficult to achieve a precise and even form in a large mould. In addition, it is not easy to subsequently punch out the moulded objects (without burrs) correctly (inside the required tolerances) near their edges, and this also requires complicated and expensive tools.

WO 2008/090543 discloses a waste-free device for thermoforming, in one (small) mould, one single spatial object per cycle from one plastic sheet which had been cut to the required dimensions beforehand. This has the significant drawback that the device only produces one moulded object per forming cycle. The yield of the device per unit time thus remains very limited as the moulding step will always be the slowest step in the process. This device uses a pallet for the sheet which passes from the inlet side of the sheet to be deformed from a sheet stack up to the outlet of the moulded object. A large number of special and complicated grippers are fitted on the pallet for the sheet edges and have to slide horizontally inwards for the gripping operation near to the sheet edges to be gripped. Unfortunately, this sliding operation cannot guarantee a sufficiently reliable gripping operation.

In addition, in WO 2008/090543 the movement of the grippers from a non-clamping to a clamping position introduces horizontal shearing forces in the sheet edges. These forces can significantly hamper a correct positioning of these edges. Moreover, transferring each empty pallet with its gripper from the removal station back to the pick-up station for subsequent single sheets is relatively complicated and time-consuming. Finally, the machine is not very compact.

US7481640 discloses a scrapless thermoforming machine having a complex loading and unloading station.

GB1500961 discloses a process and apparatus for the production of individual rimmed plastic containers, which are filled with a product, e.g. a food product.

US6086354 discloses a twin-sheet thermoforming apparatus.

US5167969 discloses a split frame for rotary vacuum mould unit, where individual rectangular plastic sheets are clamped by means of pin bars.

### BRIEF DESCRIPTION OF THE INVENTION

It is an object of the present invention to provide a good method and a good apparatus for thermoforming spatial objects.

Surprisingly, the above object is fulfilled and the advantages are obtained by providing a method and a device for carrying out a method for simultaneously continuously thermoforming a plurality of individual plastic sheets in moulds to form an identical number of individual spatial objects and, more specifically, as described in the claims. To this end, firstly, a plurality of sheets are supplied simultaneously, each from its individual sheet stack, to a supply station and from there to a transport track extending through the device.

Subsequently, the plurality of individual sheets are simultaneously passed through on the transport track in one of a plurality of identical common holders to successively at least one heating station, a moulding station and a removal station for the individual objects. To this end, each individual sheet, in order to be thermally deformed to form its spatial object, is picked up near its outer edge and clamped into this holder for the plurality of sheets simultaneously and for the protruding edges of each of the moulded objects. During the removal of the moulded objects, these edges are then released from the holder in order to remove the objects. Thereafter, a new moulding cycle can begin for successive new series of multiple individual sheets in their holders, once these holders have been transferred to the supply station.

With a view to saving time, it is an advantageous feature of the invention that the supply of the sheets for a new cycle in the supply station occurs virtually simultaneously with the removal of the moulded objects of the preceding cycle in a removal station, which removal station is preferably situated nearby the supply station. Preferably, the supply and the removal station are even arranged closely adjacent for this purpose. This also increases the compactness of the device.

The simultaneous supply of the plurality of sheets preferably takes place from the top of each sheet stack.

Preferably, with a view to a drastic saving in energy consumption, according to another aspect of the invention, each sheet in the common holder will be heated in an individual heating cell and will be moulded in an individual moulding cell to form its object by means of its mould.

Preferably, the outer edges of the sheets and the protruding edges of the moulded objects will only be clamped transversely in the holder.

In a first aspect, the present invention provides a method for continuously simultaneously thermoforming a plurality of individual plastic sheets in moulds to form an identical number of individual spatial objects. The method comprises:
- simultaneously picking-up said plurality of sheets, each from its individual sheet stack located in a supply station near an inlet side of a transport track and depositing said plurality of sheets on a common holder located on said transport track;
- each of the common holders comprising a middle frame and an upper frame which can be temporarily coupled or decoupled from the middle frame, the middle frame being adapted for supporting the sheets to be situated thereon with their outer edges, the upper frame being adapted for clamping said plurality of sheets between said middle frame and said upper frame by means of clamping means;
- simultaneously passing said plurality of sheets on the holder from the supply station through at least one heating station, a moulding station and a removal station;
- heating the sheets on the holder in the at least one heating station;
- thermally deforming the sheets on said holder in the moulding station so as to form a plurality of spatial objects;
- simultaneously removing the plurality of formed spatial objects from said holder in the removal station;
- transferring the upper frame of the holder from the removal station to the supply station;
whereby a new moulding cycle is started for successive series of a plurality of individual sheets in their holder after said holder has been transferred from the removal station to the supply station.

Each holder further comprises a plurality of transverse clamping pins and a clamping frame which is analogous to said middle frame and has elongated openings and protruding lips near edges of said openings, and the middle frame comprises suitable holes for receiving said clamping pins.

The method further comprises the steps of:
- positioning the upper frame above the middle frame and extending said clamping pins of the upper frame through the holes of the middle frame and through the elongated openings of the clamping frame for fitting the clamping frame against an underside of said middle frame;
- laterally displacing the clamping frame of the holder in the supply station such that during this displacement, a suitable tensioning of the lips occurs in order to securely clamp the edges of the sheets;
- laterally displacing the clamping frame of the holder in the removal station, such that during this displacement, a loosening of the lips occurs in order to release the edges of the moulded object.

It is an advantage of using a plurality of individual sheets, which are pre-cut to the correct size, rather than a single (large) plastic sheet, because in this way the step of separating moulded products can be avoided, and waste material is avoided, and energy requirements (a.o. for heating such waste material) are reduced.

It is an advantage that the plastic sheets are clamped only in a transverse direction in the holder, in other words that the upper frame and middle frame between which the sheets are clamped move towards each other, or away from each other without being shifted. In this way shear forces in the plastic sheets can be avoided, and the dimensions required for clamping can be as small as 1.0 mm or even 0.5 mm of the outer edge.

It is an advantage that the plastic sheets for each holder are all picked-up simultaneously, not only because it is fast, but also because by doing so, additional components and movements can be avoided in the supply station and removal station, in particular as compared to US 7,481,640 where sheets are loaded only three at the time (while the "transport tray" can hold 12 sheets), requiring an additional "billet shuttle" (not required in the present invention), and requiring a very complex three-dimensional construction for loading the sheets on the transport track, for removing the formed objects from the removal station, and for passing holder elements from the "unloading station" (cfr. removal station) to the "loading station" (cfr. supply station). Hence, a device for performing the method of the present invention can be made (much) more compact.

It is an advantage of using lips, in that they allow suitable clamping, even under varying temperatures.

It is an advantage that the holder can be easily fitted or unfitted by simply sliding the clamping frame, and by moving/removing the upper frame to/away from the middle frame.

Preferably the clamping frame remains connected to the middle frame. This has the advantage that only the upper frame needs to be passed on from the removal station to the supply station.

It is an advantage that the correct positioning of the upper frame on the middle frame is based on the insertion of a pen in a corresponding opening. This allows very precise positioning with very small tolerances.

In a method according to embodiments of the present invention, the supply of the sheets for a new cycle in the supply station may occur virtually simultaneously with the removal of the formed objects of the preceding cycle in the removal station which is situated nearby the supply station.

The simultaneous supply and removal saves time. By situating the removal station nearby and preferably adjacent to the supply station, the passage of the upper frame is easier, and the compactness of the device is increased.

In embodiments of the present invention, the simultaneous supply of the plurality of sheets may take place from the top of each individual sheet stack.

It is an advantage of picking-up the sheets from the top of the stacks as compared to e.g. the loading mechanism used in US 7,481,640, because in this way so called "billet sleeves" can be avoided, as well as the transfer from said billet sleeves to the "transport tray" (cfr. holder). In other words, in the present invention the sheets are directly loaded to the holder, whereas in US 7,481,640 the loading of the sheets is indirect.

In a method according to embodiments of the present invention, in each heating station, each sheet in the common holder may be heated in an individual heating cell and in the moulding station, each heated sheet in the holder may be moulded to form a spatial object in its individual mould. This results in a drastic saving (e.g. up to 80%) in energy consumption.

In a method according to embodiments of the present invention, the formed objects, after having been released, may be stacked in one stack per moulding cell.

It is an advantage of stacking the moulded products directly on individual stacks, as compared to some prior art devices, where the moulded products are first dropped on a conveyer belt, and only then stacked. In other words, in the present invention the moulded products are directly stacked, which is more efficient.

In a method according to embodiments of the present invention, the common holder with the formed objects may be separated in the removal station and its upper frame with the formed objects may be lifted from its middle frame while said middle frame remains on the transport track and the middle frame and the clamping frame which is slidably connected thereto, may subsequently pass to the supply station in order to repeat the cycle.

In this way, the three frames of the holder move from the removal station to the supply station: the middle frame and the clamping frame via the transport track, the upper frame via a side-track. It is an advantage of embodiments of the present invention that the latter movement does not require complex three-dimensional movements.

The lifted-up upper frame may deposit the formed objects in the removal station and may subsequently pass to the supply station in order to repeat the cycle.

In a second aspect, the present invention provides a device for continuously and simultaneously thermoforming a plurality of individual spatial objects. The device comprises:
- a transport track provided with a plurality of common holders displaced therein for simultaneously passing a plurality of plastic sheets from a supply station through at least one heating station, a moulding station to a removal station;
- each of the common holders comprising a middle frame and an upper frame which can be temporarily coupled to or decoupled from the middle frame, the middle frame being adapted for supporting the sheets to be situated thereon with their outer edges, the upper frame being adapted for clamping said plurality of sheets between said middle frame and said upper frame by means of clamping means;
- the supply station being adapted for simultaneously supplying a plurality of sheets to said holders;
- the at least one heating station being adapted for heating the sheets on said holder;
- the moulding station comprising a plurality of moulds for thermally deforming the sheets on said holder into a plurality of spatial objects;
- the removal station being adapted for simultaneously removing the plurality of formed spatial objects from said holder;
- the supply station comprising first pick-up means for simultaneously picking-up said plurality of sheets, each from its individual sheet stack located in the supply station near an inlet side of the transport track and for depositing said picked-up sheets on a holder located on said transport track;
wherein the removal station comprises second pick-up means for simultaneously removing the moulded objects from the common holder in the removal station; and wherein the device further comprises means for transferring the upper frame of the holders from the removal station to the supply station.

The device is characterised in that
- each holder further comprises a clamping frame which is analogous to said middle frame and has elongated openings and protruding lips near edges of said openings, and wherein the holder further comprises a plurality of transverse clamping pins which, in use, extend through suitable holes of the middle frame situated underneath the upper frame and through the openings of said clamping frame such that the clamping frame is fitted against an underside of said middle frame and is laterally displaceable, the clamping pins having suitable transverse indentations near their underside for receiving the lips of the clamping frame during the lateral displacement of the clamping frame, such that during this displacement, a suitable tensioning of the lips occurs on the supply side of the transport track in order to securely clamp the edges of the sheets, while, during the return movement thereof, a loosening of the lips occurs on the removal side in order to release the edges of the moulded object.

In a device according to embodiments of the present invention, the first pick-up means and the second pick-up means may be provided for picking up the sheets on the one hand, and for picking up the objects on the other hand virtually simultaneously.

A device according to embodiments of the present invention may further comprise control means adapted to move the clamping frame with respect to the middle frame in order to exert the clamping action on the sheet edges in the holder from the supply station to the removal station, and to move the clamping frame with respect to the middle frame in order to release the protruding edges of the moulded spatial objects in the removal station.

In a device according to embodiments of the present invention, the transport track may form a continuous path and the supply station for the sheets and the removal station for the moulded objects may be situated adjacent to one another. In particular embodiments, the path may be a circular track and the transport track may be configured as a carousel.

It is an advantage of embodiments of the present invention that, starting from plastic sheets, a waste-free continuous method and a compact device for uniform thermoforming of spatial objects are provided.

It is also an advantage of embodiments of the present invention that a significantly increased productivity can be achieved.

It is also an advantage of embodiments of the present invention that it requires much less energy per object to be moulded in each moulding cycle than is used when applying known non-waste-free thermoforming processes for a plurality of objects simultaneously starting from large films.

It is also an advantage of embodiments of the present invention to provide a simple carrier with holders for the edges of the sheets from their entry in the device to the removal of the moulded products from the device.

Furthermore, the invention makes it possible to simultaneously provide a plurality of spatial objects of mutually different shape per cycle, e.g. receptacles on the one hand and their lids on the other hand, or e.g. receptacles having different openings (e.g. round or polygonal or different still) near their protruding upper edges.

Moreover, it is a further advantage of embodiments of the present invention that the punching of the sheets and the thermoforming of the objects can be done in physically different places.

It is highly advantageous that in embodiments of the present invention pre-printed sheets can be used. Contrary to prior art systems, where pre-printed films can be used, but which need to be different at different locations of the punching machine (for obtaining similar pre-printed objects) because of a.o. different heating profiles over the punching device, in embodiments of the present invention the pre-printed sheets can all be the same. Hence it is not required to keep an accurate track of which pre-printed sheets are made for which location in the holder; any pre-printed sheet can be formed into an object at any location of the holder provided thereto. This is possible a.o. because of the presence, in a device according to embodiments of the present invention, of a dedicated heating per sheet.

### BRIEF DESCRIPTION OF THE DRAWINGS

This will now be described in more detail by means of an embodiment of the invention in the light of the attached figures. Numerous additional details and their advantages will thereby be explained. The protection is not limited to this embodiment. Numerous variants which are obvious to the person skilled in the art are deemed to also form part of the protection formulated and defined in the claims.
FIG. 1 relates to a diagrammatic top view of a device with a circular transport track according to an embodiment of the present invention.
FIG. 2 diagrammatically shows a perspective view of the elements of a holder which are to be stacked on top of each other (carrying frame for sheets, transport frame and clamping frame) for passage on the transport track, as can be used in the device of FIG. 1.
FIG. 3 shows a cross section of the holder of FIG. 2, with the unformed sheets clamped transversely therein for passage to and beyond the moulding station. The outer edges are clamped in the supply station, remain clamped during the heating and the moulding, and are released in the removal station.
FIG. 4 shows an enlarged detail of the holder of FIG. 3, showing a possible clamping action by laterally displacing the clamping frame near its underside into a position where it is not yet clamped.
FIG. 5 is an analogue detail of the underside of the clamping frame of FIG. 4 in a clamped position.
FIG. 6 outlines a cross section of a separated holder with sheets in the supply station and of a first gripper for the sheets to be supplied.
FIG. 7 outlines a cross section of the separated holder with moulded objects in the removal station and of a second gripper for the objects to be removed.

### DETAILED DESCRIPTION

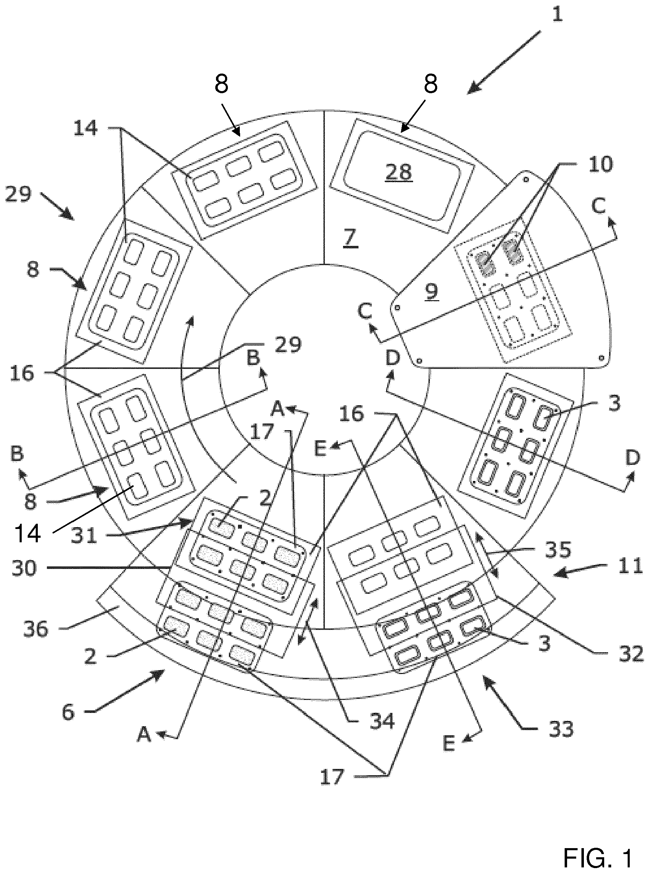

The top view from FIG. 1 shows a wide circular ring as a continuous transport track 7 in the device 1 for thermoforming plastic sheets 2 to form moulded spatial objects 3, such as e.g. receptacles. The sheets may be blank or appropriately pre-printed, so that upon the formation of the moulded objects 3 a desired printing is immediately present.

The transport track 7 comprises a number (e.g. eight in the embodiment illustrated) of segments A to E with suitable openings 28 for receiving the holders 12 for clamping the sheets 2 to be transported and for the subsequent treatment steps to be performed on the sheets 2. In the embodiment illustrated, the continuous transport track is shown as a circular ring, but the invention is not limited thereto, and any suitable form of transport track 7 configuration may be used. Preferably the transport track 7 presents a closed configuration, including for instance a square or rectangular or polygonal configuration.

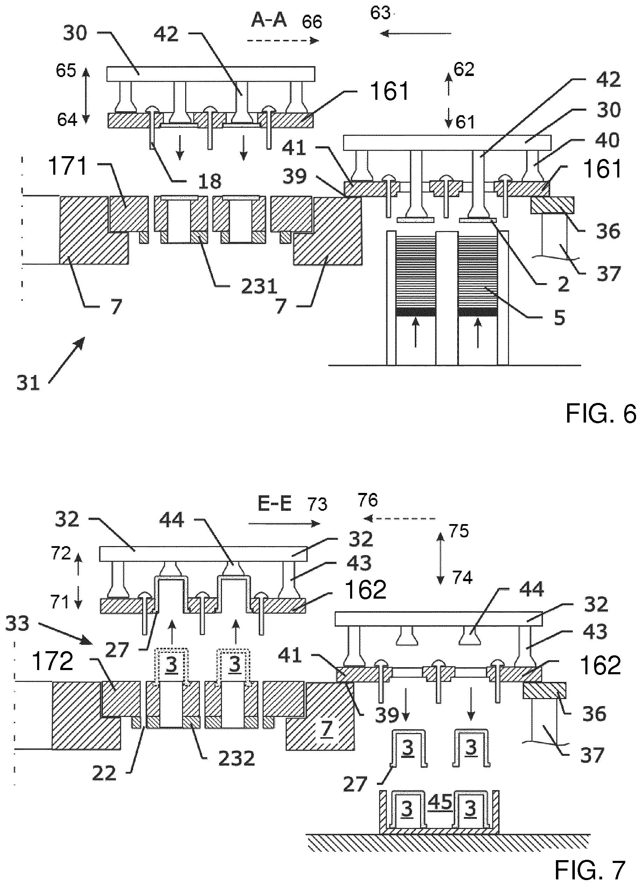

FIG. 6 illustrates the supply of the sheets 2 to the supply station 6 (segment A) which are all picked up simultaneously from a number (e.g. six) of sheet stacks 5 using first pick-up means 30 and a temporarily associated carrying frame 161. This first feed step for the method is explained below, as is the passage of the picked-up sheets 2 to a holder 12 on the transport track.

Subsequently, the transport track 7 intermittently pushes the holder 12 with sheets 2 to a sufficient series of heating cells 14 in heating stations 8 in the segments B for their first and subsequent heating steps. There, the sheets 2 are sufficiently heated in their holder 12. Each heating station 8 which is arranged so as to be stationary in the device during use comprises a plurality of separate heating cells 14 (the number of heating cells being identical to the number of sheets per holder), each with its own adjustable heat source; in the example illustrated six heating cells 14. The setting for e.g. time and temperature depends inter alia on the composition and the volume of the sheets 2. Heating is thus carried out in a very targeted manner per sheet 2 opposite its heating cell 14, as a result of which an energy saving of more than 80% can be achieved compared to the prior-art technology. In each heating station 8, the heating cells 14 may be arranged above or below, but preferably above and below the uninterrupted transport track 7 in order to achieve quicker and more even heating.

Thereafter, the transport track 7 shifts the sufficiently heated sheets 2 on to the moulding station 9 with suitable moulds 10 in segment C. In station 9 as well, each sheet 2 in the holder 12 is situated directly opposite its own mould halves (in each mould cell 10) above and below the sheet 2. As a result of this arrangement, the energy consumption (inter alia for air pressure on the one hand, and vacuum on the other hand, in the moulds) according to the invention can be further reduced to a fraction of the consumption of the prior art technology. The deformation in the cooled moulds 10 may be carried out both positive and negative. With a positive deformation, e.g. the bottom of each object (e.g. receptacle) 3 is pushed upwards by a male moulding plunger (pre-stretched) with respect to the level of the sheet edges 13. A negative deformation occurs in the opposite direction (i.e. pushed downwards). These techniques are known per se. They permit a.o. quick and accurate formation and deformation of objects 3 having relatively sharp edges and corners and having smaller tolerances with regard to their wall thickness or having large or irregular or jagged curvatures in their surface. The residence time of the sheet 2 in the mould is a few seconds at most, depending on the sheet thickness and composition of the plastic of the sheets 2.

The moulded objects 3 are then passed from the moulding station 9 to the removal station 11 in segment E and deposited there. This removal operation is described below with reference to FIG. 7. However, prior to the removal, any additional treatment of the moulded objects 3 may be carried out in an intermediate station in segment D (in FIG. 1), such as e.g. applying a print or marking or labels or punching out one or more holes in one or more of their walls. It is even conceivable to transport the objects (e.g. receptacles) 3 in segment D away to a filling station and to subsequently seal them there by means of a cover film using high-frequency heat sealing.

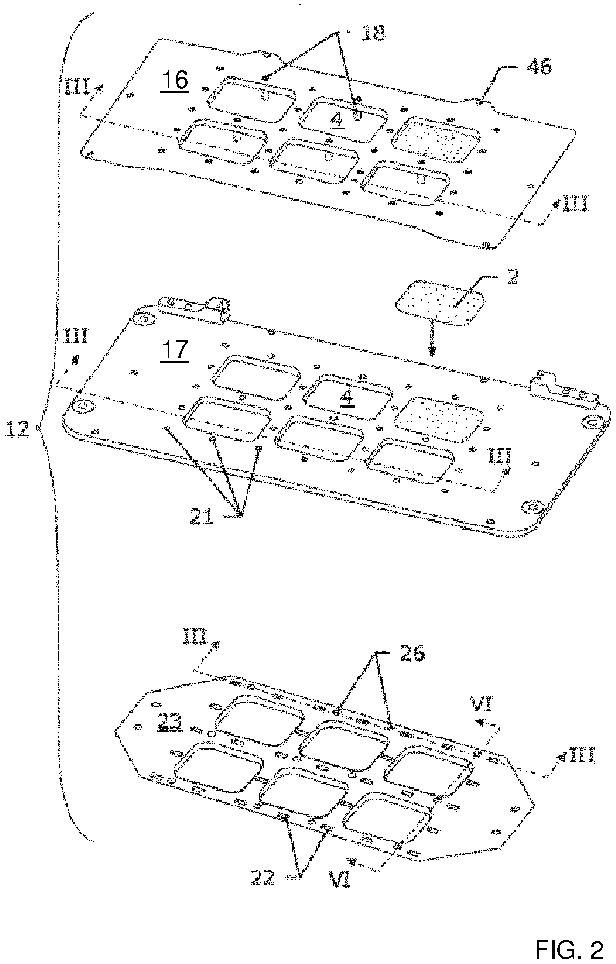

FIG. 2 shows a perspective view of the basic construction of a separated holder 12 comprising an upper carrying frame 16 (also referred to herein as "upper frame") for clamping and transporting the sheets 2, a central transport frame 17 (also referred to herein as "middle frame") which at all times moves along with the transport track 7, and a clamping frame 23 (also referred to herein as "lower frame") which is connectable to the middle frame 17. These frames 16, 17 and 23 have an analogous shape, meaning they have corresponding openings for holding the sheets 2 to be deformed to objects 3 and for being clamped together. During the treatment steps between supply and discharge, the sheets 2 or objects 3, respectively, extend over the mould openings 4 in their holder 12. The sheets 2 resp. the moulded objects 3 are thereby clamped by their outer edges 13 resp. by their protruding edges 27, between the carrying frame 16 and the transport frame 17. According to embodiments of the invention, the width of these clamped edges 13 and 27 may be very narrow, e.g. from 0.5 mm to not more than 1 mm. Clamping pins 18 are fitted on the carrying frame 16, around each opening 4 and between the neighbouring openings 4. When the holder 12 is joined together, these pins 18 extend through suitable and correspondingly located holes 21 in the transport frame 17 and through suitable elongated openings 22 in the clamping frame 23.

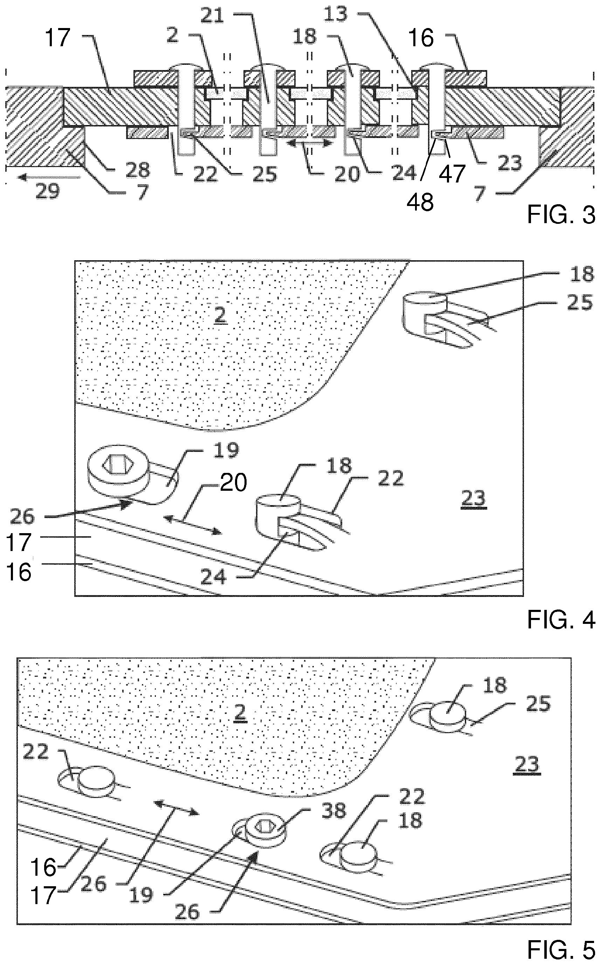

FIG. 3 diagrammatically shows the operation of the holder 12. The cross sections III-III of the frames 16, 17 and 23 from FIG. 2 are illustrated in their mutual combination in FIG. 3. In each mould opening 4, one sheet 2 is situated, clamped at its edge 13, between the underside of the carrying frame 16 and the upper side of the transport frame 17. The transport frame 17 of each holder 12 in turn rests in suitable openings 28 (see FIG. 1) of the transport track 7. Lowering the carrying frame 16 with its clamping pins 18 through the holes 21 in the transport frame 17 and the elongated openings 22 in the clamping frame 23 is the first step of the transverse clamping operation for the sheet edges 13. This step is carried out in the supply station 6, as will be explained below with reference to FIG. 4 and FIG. 5.

FIG. 4 and FIG. 5 show a detail of the underside of a clamping frame 23 in order to illustrate a possible clamping action using control means 20 (represented by arrow 20). It is noted that in FIG. 4 and FIG. 5, the frames 16, 17 and 23 are situated upside down on top of each other compared to their standard position in e.g. FIG. 3.) It should be noted that the transport frame 17 and the clamping frame 23 are permanently coupled to each other so as to be slidable to and fro by means of sliding means 26 which are known per se. These sliding means 26 may comprise, e.g. a series of transverse lock bolts 38 through both the transport frame 17 and the clamping frame 23, the heads of which bolts 38 project at the bottom out of suitable elongate slots 19 in the clamping frame 23. Control units for this lateral (horizontal) to-and-fro sliding operation are not shown here, as they are well known to the person skilled in the art.

FIG. 4 shows a perspective view of the situation just before the start of the clamping operation on the transport track 7 in the supply station 6. This situation returns for the purpose of the releasing of the moulded objects 3 in the removal station 11. On an edge of each elongated opening 22 in the clamping plate 23, a lip 25 extends which forms part of the clamping plate 23. Directly opposite these lips 25, suitable indentations 24 are provided near the underside of the clamping pins 18. The shapes of the lips 25 and indentations 24 are such that, when the lips 25 are being slid into their corresponding indentations 24, by sidewardly sliding the clamping frame 23, the lips 25 hold down and keep into position the associated clamping pins 18. To this end, two complementary bevelled edges 47 and 48, respectively, may in particular be provided on the end of the lip 25 and on the opposite edge of the indentation (passage) 24 . Thus, the three frames 17, 16 and 23 with the interposed sheet edges 23 are transversely clamped together during the horizontal displacement of the clamping plate 23 for anchoring their mutual positions until they reach the removal station 11, as illustrated in FIG. 5. See also FIG. 3. The bevelled edges 47, 48 are not illustrated in FIG. 4 and FIG. 5.

FIG. 6 shows two situations (positions) in the same figure for the first pick-up means 30 for simultaneously picking up a plurality of sheets 2 in the supply station 6 (segment A in FIG. 1). Picking up the sheets 2 is carried out by the first grippers 30 in the right-hand half of FIG. 6. These grippers 30 may e.g. descend (arrow 61) as far as the carrying frame 161 and attach themselves by suction e.g. in the corners of this carrying frame 161 by means of their first coupling elements 40 for a temporary coupling thereto. After all, the carrying frame 161 with clamping pins 18 is already present in the supply station 6 near its one edge 41 on the outer edge 39 of the transport track 7. The opposite edge of the carrying frame 161 rests on a supporting ring 36 and can slide over it. This supporting ring 36 is securely fastened in the chassis 37 of the device, near the supply station 6 and the removal station 11 (see FIG. 1). The way in which this carrying frame 161 ends up in the supply station 6 is explained below.

Then, the first temporary coupling elements 42 for the sheets 2 can descend from the first grippers 30 to the plurality of the upper sheets 2, each in their stack 5, and lift these sheets 2 (via suction). These grippers 30 can then lift the carrying frame 161 with the sheets 2 (arrow 62) and move the carrying frame 161 horizontally (arrow 63) until it is situated above the transport frame 171 on the transport track 7 (left-hand side of FIG. 6). Thereafter, the first gripper 30 (arrow 64) with carrying frame 161 and sheets 2 can descend to the associated transport frame 171 of a (separated) holder 12. The first (temporary) coupling elements 40 and the first temporary coupling means 42, respectively, can release the sheets 2 and the carrying frame 161 from the first gripper 30 there and place (deposit) them in a suitable manner on the transport frame 171. The clamping pins 18 of the carrying frame 161 descend simultaneously through the holes 21 and continue through the elongated openings 22 in the associated clamping frame 231, which is connected to the transport frame 171. Finally, this clamping frame 231 is suitably displaced horizontally (Figures 5 and 3) with respect to the transport frame 171 for suitably clamping the sheet edges 13, so that the transport track 7 with clamped sheets 2 in their holder 12 can continue (e.g. slide or shift) towards the first heating station 8 (segment B) and beyond. Finally, the first grippers 30 can be lifted up again (arrow 65), but this time without the carrying frame 161 and without the sheets 2, and be returned horizontally (arrow 66) until they are above the sheet stacks 5 in order to start a new moulding cycle for loading a subsequent carrying frame 161 with a subsequent series of sheets 2.

FIG. 7 diagrammatically shows an analogue situation for the second pick-up means 32 for moulded objects 3 in a neighbouring removal station 11 (segment E in FIG. 1). Here, the carrying frame 162 and the moulded objects 3 can be lifted up by means of the second grippers 32 on the left-hand side of FIG. 7. These grippers 32 can descend (arrow 71) as far as the carrying frame 162 of the holder 12. Simultaneously, the clamping frame 232 with elongated openings 22 can be pushed back horizontally in a suitable manner (FIG. 4) in order to release the clamping action of the lips 25 in the indentations 24 at the bottom of the pins 18. The protruding edges 27 of the objects 3 are now released. The second temporary coupling elements 43 for lifting the carrying frame 162 in the removal station 11 can now be coupled to the upper side of this carrying frame 162 (e.g. by suction).

Subsequently, the second temporary coupling means 44 for the moulded three-dimensional objects 3 can descend from the second grippers 32 for coupling to (a part of) these objects 3. These second grippers 32 can then lift up the carrying frame 162 and the objects 3 from the transport frame 172 on the transport track 7 (arrow 72) and transport them horizontally (arrow 73) until they are above the deposition area 45 for the objects (right-hand side of FIG. 7). Then, the second grippers 32 above the deposition area 45 can descend and deposit the carrying frame 162 on the outer edge 39 of the transport track 7 and on the supporting ring 36 (arrow 74), thereafter interrupting the temporary coupling to the second temporary coupling elements 43. Subsequently, the second temporary coupling means 44 can unload their moulded objects 3 onto the deposition area. Finally, the second pick-up means 32 can be lifted up again (arrow 75) but this time without the carrying frame 162 and without the objects 3, and be transported back horizontally until they are above the transport track 7 in the removal station 11 (arrow 76) for performing the removal operation at the end of the next moulding cycle.

According to a particular aspect of the invention, the deposition operation of the carrying frame 162 (right-hand side of FIG. 7) on said outer edge 39 of the transport track 7 and supporting ring 36 can be effected in such a way that this carrying frame 162 is temporarily coupled, e.g. near two corners, by its edge 41 to the edge 39, e.g. via a known tenon-mortise joint 46 (FIG. 2). When the transport track 7 then moves one step along to the supply station 6 which is preferably situated nearby, it carries the carrying frame 172 along. The opposite edge of the carrying frame 162 then slides along with the supporting ring 36 until it reaches the supply station 6. Surprisingly, the separated holder 12 thus makes it possible to carry out in each case the supply of sheets 2 for a next cycle and the removal of objects 3 from a previous cycle simultaneously and without any loss of time. The first gripper 30 in the supply station 6 moves with the sheets 2 towards the transport track 7 (arrow 63 of FIG. 6) while the second gripper 32 in the removal station 11 moves away from the transport track 7 (arrow 73 in FIG. 7) until it is situated above the deposition area 45 for the objects 3. The grippers 30 and 32 move in their opposite direction (arrow 66, 76) in order to start the next cycle. The person skilled in the art can use different picking-up and depositing systems for sheets 2 and carrying frames 161 and 162. In other words, the above-described picking-up and depositing means for sheets 2 and objects 3 are only intended as an example.

Overall, a cycle using the described, highly productive device therefore comprises at least three simultaneous advancing steps and three simultaneous intervals for treatment in between: heating, moulding and simultaneously supplying and removing. More treatment intervals may be provided, either for introducing further actions, or for duplicating one or more of the treatment actions, such as for instance heating. At the end of each cycle, this embodiment will thus deliver a predetermined number of receptacles, preferably as many receptacles as there are mould openings 4 in the holder 12, e.g. six receptacles 3 in the embodiment illustrated. In concrete terms, this thus means the production of a plurality of receptacles 3 at a high frequency. After all, with regard to time, the successive cycles overlap greatly as, in phase, they continue at an interval of only one advancement step. Usually, multiple heating stations will be required. However, an increase of the number of heating stations 8 does not lower the removal frequency of these six moulded objects 3. If the moulding step (which typically requires the longest time and hence defines the dwell time in each of the stations) takes e.g. 2.5 s (seconds) and an advancement step takes 0.5 s, then six objects 3 are delivered every 3 s in this example, while the total time that each sheet/object spends in the device is the number of stations x 2.5 s + (the number of stations - 1) x 0.5 s. A device according to embodiments of the present invention provides a very low energy consumption (e.g. reduced by about 80%), without waste of plastics material and with formation of dimensionally accurate objects, with small tolerances of up to 0.1 mm. Also during start-up, compared to prior art devices, less waste is being generated.

The moulded spatial objects 3 may be simple receptacles such as e.g. cups or boxes, but may also have a shape which is much more complicated. However, their protruding edges 27 are always located in the same plane. Thus, these edges 27 can also form a useful supporting frame for subsequently (after filling) providing and attaching (e.g. by heat-sealing) cover films to the receptacles. The invention also makes it possible to reduce changeover times (or switching times) for the device for producing other object shapes to a fraction of what they were in the past, partly due to the greatly simplified holders 12 for holding the outer edges 13 of the sheets 2 and the protruding edges 27 of the objects 3 and due to the individual moulds 10.

Finally, the use of an individual heating cell 14 and an individual mould 10 for each sheet 2 and object 3 also greatly increases the flexibility of the method. Simultaneously producing different object volumes and shapes per holder 12 only requires predetermined production parameters per heating cell 14 and per mould 10, for appropriate heating and moulding, respectively. This can quickly be solved by using individualized moulds 10. In addition, the carrying frame 17 and the transport frame 16 in the holders 12 can be provided with replaceable inserts for this purpose, for the edge perimeters 13 and 27 (e.g. round or polygonal) desired (per heating cell 14 and per mould 10).

To the person skilled in the art, these and numerous other variants are deemed to form part of the protection defined in the attached claims.

### REFERENCE NUMERALS DRAWINGS

- 1: device
- 2: plastic sheets
- 3: moulded spatial objects
- 4: mould opening in the holder
- 5: sheet stack
- 6: supply station
- 7: transport track
- 8: heating station
- 9: moulding station
- 10: mould
- 11: removal station
- 12: holder
- 13: outer edge of a sheet
- 14: heating cell
- 15: moulding cell
- 16: carrying frame, also referred to as upper frame
- 17: transport frame, also referred to as middle frame
- 18: clamping pins
- 19: slots
- 20: control means for clamping action
- 21: holes
- 22: elongated opening
- 23: clamping frame (also referred to as bottom frame)
- 24: indentation
- 25: protruding lip
- 26: sliding means
- 27: protruding edge
- 28: openings
- 29: (arrow) movement direction of the circular ring as transport track
- 30: first pick-up means
- 31: deposit zone
- 32: second pick-up means
- 33: deposit zone
- 34: (arrow) movement direction horizontal to and fro
- 35: (arrow) movement to and fro horizontal
- 36: supporting ring
- 37: chassis
- 38: sliding lock bolts
- 39: outer edge
- 40: first (temporary) coupling elements
- 41: edge
- 42: first temporary coupling means
- 43: second (temporary) coupling elements
- 44: second temporary coupling means
- 45: deposition area
- 46: tenon-mortise joint
- 47, 48: complementary bevelled edges

## Claims

1. Method for continuously simultaneously thermoforming a plurality of individual plastic sheets (2) in moulds (10) to form an identical number of individual spatial objects (3), the method comprising:
- simultaneously picking-up said plurality of sheets (2), each from its individual sheet stack (5) located in a supply station (6) near an inlet side of a transport track (7) and depositing said plurality of sheets (2) on a common holder (12) located on said transport track (7);
- simultaneously passing said plurality of sheets (2) on the holder (12) from the supply station (6) through at least one heating station (8), a moulding station (9) and a removal station (11);
- heating the sheets (2) on the holder (12) in the at least one heating station (8);
- thermally deforming the sheets (2) on said holder (12) in the moulding station (9) so as to form a plurality of spatial objects (3);
- simultaneously removing the plurality of formed spatial objects (3) from said holder (12) in the removal station (11);
- transferring the upper frame (16) of the holder (12) from the removal station (11) to the supply station (6);
- whereby a new moulding cycle is started for successive series of a plurality of individual sheets (2) in their holder (12) after said holder (12) has been transferred from the removal station (11) to the supply station (6);
**characterised in that**:
- each of the common holders (12) comprises a middle frame (17) and an upper frame (16), and which can be temporarily coupled or decoupled from the middle frame (17), the middle frame (17) being adapted for supporting the sheets (2) to be situated thereon with their outer edges (13), the upper frame (16) being adapted for clamping said plurality of sheets (2) between said middle frame (17) and said upper frame (16) by means of clamping means (18, 23, 24, 25);
- each holder (12) further comprises a plurality of transverse clamping pins (18) and a clamping frame (23) which is analogous to said middle frame (16) and has elongated openings (22) and protruding lips (25) near edges of said openings (22), and wherein the middle frame (17) comprises suitable holes (21) for receiving said clamping pins (18);
and **in that** the method further comprises the steps of:
- positioning the upper frame (16) above the middle frame (17) and extending said clamping pins (18) of the upper frame (16) through the holes (21) of the middle frame (17) and through the elongated openings (22) of the clamping frame (23) for fitting the clamping frame (23) against an underside of said middle frame (17);
- laterally displacing the clamping frame (23) of the holder (12) in the supply station (6) such that during this displacement, a suitable tensioning of the lips (25) occurs in order to securely clamp the edges (13) of the sheets (2);
- laterally displacing the clamping frame (23) of the holder (12) in the removal station (11), such that during this displacement, a loosening of the lips (25) occurs in order to release the edges (27) of the moulded object (3).

2. Method according to Claim 1, in which the supply of the sheets (2) for a new cycle in the supply station (6) occurs virtually simultaneously with the removal of the formed objects (3) of the preceding cycle in the removal station (11) which is situated nearby the supply station (6).

3. Method according to Claim 1 or 2, in which the simultaneous supply of the plurality of sheets (2) takes place from the top of each individual sheet stack (5).

4. Method according to any of the previous claims, in which, in each heating station (8), each sheet in the common holder (12) is heated in an individual heating cell (14) and in which, in the moulding station (9), each heated sheet in the holder (12) is moulded to form a spatial object (3) in its individual mould (10).

5. Method according to any of the previous claims, in which the formed objects (3), after having been released, are stacked in one stack per moulding cell (15).

6. Method according to any of the previous claims, in which the common holder (12) with the formed objects (3) is separated in the removal station (11) and in which its upper frame (16) with the formed objects (3) is lifted from its middle frame (17) while said middle frame (17) remains on the transport track (7) and the middle frame (17) and the clamping frame (23) which is slidably connected thereto, subsequently passes to the supply station (6) in order to repeat the cycle.

7. Method according to Claim 6, in which the lifted-up upper frame (16) deposits the formed objects (3) in the removal station (11) and subsequently passes to the supply station (6) in order to repeat the cycle.

8. A device for_continuously and simultaneously thermoforming a plurality of individual spatial objects (3), the device comprising:
- a transport track (7) provided with a plurality of common holders (12) displaced therein for simultaneously passing a plurality of plastic sheets (2) from a supply station (6) through at least one heating station (8), a moulding station (9) to a removal station (11);
- the supply station (6) being adapted for simultaneously supplying a plurality of sheets (2) to said holders (12);
- the at least one heating station (8) being adapted for heating the sheets (2) on said holder (12);
- the moulding station (9) comprising a plurality of moulds (10) for thermally deforming the sheets (2) on said holder (12) into a plurality of spatial objects (3);
- the removal station (11) being adapted for simultaneously removing the plurality of formed spatial objects (3) from said holder (12);
- the supply station (6) comprising first pick-up means (30) for simultaneously picking-up said plurality of sheets (2), each from its individual sheet stack (5) located in the supply station (6) near an inlet side of the transport track (7) and for depositing said picked-up sheets (2) on a holder (12) located on said transport track (7);
- wherein the removal station (11) comprises second pick-up means (32) for simultaneously removing the moulded objects (3) from the common holder (12) in the removal station;
- wherein the device further comprises means (46) for transferring the upper frame (16) of the holders (12) from the removal station (11) to the supply station (6);
**characterised in that**
- each of the common holders (12) comprises a middle frame (17) and an upper frame (16), and which can be temporarily coupled to or decoupled from the middle frame (17), the middle frame (17) being adapted for supporting the sheets (2) to be situated thereon with their outer edges (13), the upper frame (16) being adapted for clamping said plurality of sheets (2) between said middle frame (17) and said upper frame (16) by means of clamping means (18, 23, 24, 25);
- each holder (12) further comprises a clamping frame (23) which is analogous to said middle frame (17) and has elongated openings (22) and protruding lips (25) near edges of said openings (22), and wherein the holder (12) further comprises a plurality of transverse clamping pins (18) which, in use, extend through suitable holes (21) of the middle frame (17) situated underneath the upper frame (16) and through the openings (22) of said clamping frame (23) such that the clamping frame (23) is fitted against an underside of said middle frame (17) and is laterally displaceable, the clamping pins (18) having suitable transverse indentations (24) near their underside for receiving the lips (25) of the clamping frame (23) during the lateral displacement of the clamping frame (23), such that during this displacement, a suitable tensioning of the lips (25) occurs on the supply side of the transport track (7) in order to securely clamp the edges (13) of the sheets (2), while, during the return movement thereof, a loosening of the lips (25) occurs on the removal side in order to release the edges (27) of the moulded object (3).

9. Device according to Claim 8, in which the first pick-up means (30) and second pick-up means (32) are provided for picking up the sheets (2) on the one hand, and picking up the objects (3) on the other hand virtually simultaneously.

10. Device according to Claim 8 or 9, further comprising control means (20) adapted to move the clamping frame (23) with respect to the middle frame (17) in order to exert the clamping action on the sheet edges (13) in the holder (2) from the supply station (6) to the removal station (11), and to move the clamping frame (23) with respect to the middle frame (17) in order to release the protruding edges (27) of the moulded spatial objects (3) in the removal station (11).

11. Device according to any of the claims 8 to 10, wherein the transport track (7) forms a continuous path and wherein the supply station (6) for the sheets (2) and the removal station (11) for the moulded objects (3) are situated adjacent to one another.

12. Device according to claim 11, wherein the path is a circular track and the transport track (7) is configured as a carousel.

## Patentansprüche

1. Verfahren zum kontinuierlichen, gleichzeitigen Thermoformen einer Vielzahl von einzelnen Kunststofffolien (2) in Formen (10) zum Formen einer identischen Anzahl von einzelnen räumlichen Objekten (3), wobei das Verfahren umfasst:
- Gleichzeitiges Aufnehmen der besagten Vielzahl von Folien (2), jede von ihrem einzelnen Folienstapel (5), der sich in einer Zuführstation (6) nahe einer Einlassseite einer Transportbahn (7) befindet, und Ablegen der besagten Vielzahl von Folien (2) auf einem gemeinsamen Halter (12), der sich auf der besagten Transportbahn (7) befindet;
- Gleichzeitiges Durchleiten der besagten Vielzahl von Folien (2) auf dem Halter (12) von der Zuführstation (6) durch zumindest eine Heizstation (8), eine Formstation (9) und eine Entnahmestation (11);
- Erwärmen der Folien (2) auf dem Halter (12) in der zumindest einen Heizstation (8);
- Thermisches Verformen der Folien (2) auf dem besagten Halter (12) in der Formstation (9), um eine Vielzahl von räumlichen Objekten (3) zu formen;
- Gleichzeitiges Entfernen der Vielzahl von geformten räumlichen Objekten (3) vom besagten Halter (12) in die Entnahmestation (11);
- Übertragen des oberen Rahmens (16) des Halters (12) von der Entnahmestation (11) zur Zuführstation (6);
- wodurch ein neuer Formzyklus für aufeinanderfolgende Reihen einer Vielzahl von einzelnen Folien (2) in ihrem Halter (12) gestartet wird, nachdem der besagte Halter (12) von der Entnahmestation (11) zur Zuführstation (6) übertragen worden ist;
**dadurch gekennzeichnet, dass**:
- jeder der gemeinsamen Halter (12) einen mittleren Rahmen (17) und einen oberen Rahmen (16) umfasst, und der vorübergehend an den mittleren Rahmen (17) gekoppelt oder davon abgekoppelt werden kann, wobei der mittlere Rahmen (17) ausgeführt ist, um die Folien (2) zu tragen, die sich mit ihren Außenkanten (13) darauf zu befinden haben, wobei der obere Rahmen (16) ausgeführt ist, um die besagte Vielzahl von Folien (2) anhand von Klemmmitteln (18, 23, 24, 25) zwischen dem besagten mittleren Rahmen (17) und dem besagten oberen Rahmen (16) zu klemmen;
- jeder Halter (12) darüber hinaus eine Vielzahl von querlaufenden Klemmstiften (18) und einen Klemmrahmen (23) umfasst, der analog zum besagten mittleren Rahmen (16) ist und längliche Öffnungen (22) und vorspringende Lippen (25) nahe den Kanten der besagten Öffnungen (22) aufweist, und wobei der mittlere Rahmen (17) geeignete Löcher (21) zur Aufnahme der besagten Klemmstifte (18) umfasst;
und dadurch, dass das Verfahren darüber hinaus die Schritte umfasst:
- Positionieren des oberen Rahmens (16) über dem mittleren Rahmen (17) und Erstrecken der besagten Klemmstifte (18) des oberen Rahmens (16) durch die Löcher (21) des mittleren Rahmens (17) und durch die länglichen Öffnungen (22) des Klemmrahmens (23) zur Montage des Klemmrahmens (23) an einer Unterseite des besagten mittleren Rahmens (17);
- Seitliches Verschieben des Klemmrahmens (23) des Halters (12) in der Zuführstation (6), sodass während dieses Verschiebens eine geeignete Spannung der Lippen (25) auftritt, um die Kanten (13) der Folien (2) sicher zu klemmen;
- Seitliches Verschieben des Klemmrahmens (23) des Halters (12) in der Entnahmestation (11), sodass während dieses Verschiebens ein Lösen der Lippen (25) auftritt, um die Kanten (27) des geformten Objekts (3) freizugeben;

2. Verfahren nach Anspruch 1, wobei das Zuführen der Folien (2) für einen neuen Zyklus in der Zuführstation (6) virtuell gleichzeitig mit dem Entnehmen der geformten Objekte (3) des vorhergehenden Zyklus in der Entnahmestation (11) auftritt, die sich nahe der Zuführstation (6) befindet.

3. Verfahren nach Anspruch 1 oder 2, wobei das gleichzeitige Zuführen der Vielzahl von Folien (2) von der Oberseite eines jeden einzelnen Folienstapels (5) stattfindet.

4. Verfahren nach einem der vorhergehenden Ansprüche, wobei in jeder Heizstation (8) jede Folie im gemeinsamen Halter (12) in einer einzelnen Heizzelle (14) erwärmt wird und wobei in der Formstation (9) jede erwärmte Folie auf dem Halter (12) geformt wird, um in ihrer einzelnen Form (10) ein räumliches Objekt (3) zu formen.

5. Verfahren nach einem der vorhergehenden Ansprüche, wobei die geformten Objekte (3), nachdem sie freigegeben worden sind, auf einen Stapel je Formzelle (15) gestapelt werden.

6. Verfahren nach einem der vorhergehenden Ansprüche, wobei der gemeinsame Halter (12) mit den geformten Objekten (3) in der Entnahmestation (11) getrennt wird, und wobei sein oberer Rahmen (16) mit den geformten Objekten (3) von seinem mittleren Rahmen (17) angehoben wird, während der besagte mittlere Rahmen (17) auf der Transportbahn (7) verbleibt, und der mittlere Rahmen (17) und der Klemmrahmen (23), der gleitend damit verbunden ist, anschließend zur Zuführstation (6) übergehen, um den Zyklus zu wiederholen.

7. Verfahren nach Anspruch 6, wobei der angehobene obere Rahmen (16) die geformten Objekte (3) in der Entnahmestation (11) ablegt, und anschließend zur Zuführstation (6) übergeht, um den Zyklus zu wiederholen.

8. Vorrichtung zum kontinuierlichen, gleichzeitigen Thermoformen einer Vielzahl von einzelnen räumlichen Objekten (3), wobei die Vorrichtung umfasst:
- eine Transportbahn (7), die mit einer Vielzahl von gemeinsamen Haltern (12) bereitgestellt wird, die darauf zum gleichzeitigen Durchleiten einer Vielzahl von Kunststofffolien (2) von einer Zuführstation (6) durch zumindest eine Heizstation (8), eine Formstation (9) zu einer Entnahmestation (11) bewegt werden;
wobei die Zuführstation (6) ausgeführt ist, um gleichzeitig eine Vielzahl von Folien (2) zu den besagten Haltern (12) zuzuführen;
- wobei die zumindest eine Heizstation (8) ausgeführt ist, um die Folien (2) auf dem besagten Halter (12) zu erwärmen;
- wobei die Formstation (9) eine Vielzahl von Formen (10) zur thermischen Verformung der Folien (2) auf dem besagten Halter (12) in eine Vielzahl von räumlichen Objekten (3) umfasst;
- wobei die Entnahmestation (11) ausgeführt ist, um gleichzeitig die Vielzahl von geformten räumlichen Objekten (3) vom besagten Halter (12) zu entfernen;
- wobei die Zuführstation (6) erste Aufnahmemittel (30) zum gleichzeitigen Aufnehmen der besagten Vielzahl von Folien (2), jedes von seinem einzelnen Folienstapel (5) umfasst, die sich in der Zuführstation (6) nahe einer Einlassseite einer Transportbahn (7) befinden, und zum Ablegen der besagten aufgenommenen Folien (2) auf einem Halter (12), der sich auf der besagten Transportbahn (7) befindet;
- wobei die Entnahmestation (11) zweite Aufnahmemittel (32) zum gleichzeitigen Entfernen der geformten Objekte (3) vom gemeinsamen Halter (12) in der Entnahmestation umfasst;
- wobei die Vorrichtung darüber hinaus Mittel (46) zum Übertragen des oberen Rahmens (16) der Halter (12) von der Entnahmestation (11) zur Zuführstation (6) umfasst;
**dadurch gekennzeichnet, dass**
- jeder der gemeinsamen Halter (12) einen mittleren Rahmen (17) und einen oberen Rahmen (16) umfasst, und der vorübergehend an den mittleren Rahmen (17) gekoppelt oder davon abgekoppelt werden kann, wobei der mittlere Rahmen (17) ausgeführt ist, um die Folien (2) zu tragen, die sich mit ihren Außenkanten (13) darauf zu befinden haben, wobei der obere Rahmen (16) ausgeführt ist, um die besagte Vielzahl von Folien (2) anhand von Klemmmitteln (18, 23, 24, 25) zwischen dem besagten mittleren Rahmen (17) und dem besagten oberen Rahmen (16) zu klemmen;
- jeder Halter (12) darüber hinaus einen Klemmrahmen (23) umfasst, der analog zum besagten mittleren Rahmen (16) ist und längliche Öffnungen (22) und vorspringende Lippen (25) nahe den Kanten der besagten Öffnungen (22) aufweist, und wobei der Halter (12) darüber hinaus eine Vielzahl von querlaufenden Klemmstiften (18) umfasst, die sich im Gebrauch durch geeignete Löcher (21) des mittleren Rahmens (17) erstrecken, der sich unterhalb des oberen Rahmens (16) befindet, und durch die Öffnung (22) des besagten Klemmrahmens (23), sodass der Klemmrahmen (23) an einer Unterseite des besagten mittleren Rahmens (17) angebracht ist, und seitlich verschiebbar ist, wobei die Klemmstifte (18) geeignete querlaufende Vertiefungen (24) nahe ihrer Unterseite zur Aufnahme der Lippen (25) des Klemmrahmens (23) während der seitlichen Verschiebung des Klemmrahmens (23) aufweisen, sodass während dieser Verschiebung eine geeignete Spannung der Lippen (25) an der Zuführseite der Transportbahn (7) auftritt, um die Kanten (13) der Folien (2) sicher zu klemmen, während bei der Rückbewegung davon ein Lösen der Lippen (25) an der Entnahmeseite auftritt, um die Kanten (27) des geformten Objekts (3) freizugeben.

9. Vorrichtung nach Anspruch 8, wobei die ersten Aufnahmemittel (30) und zweiten Aufnahmemittel (32) virtuell gleichzeitig zur Aufnahme der Folien (2) auf der einen Seite und zur Aufnahme der Objekte (3) auf der anderen Seite bereitgestellt werden.

10. Vorrichtung nach Anspruch 8 oder 9, darüber hinaus Steuermittel (20) umfassend, die ausgeführt sind, um den Klemmrahmen (23) im Verhältnis zum mittleren Rahmen (17) zu bewegen, um den Klemmvorgang an den Folienkanten (13) im Halter (2) von der Zuführstation (6) zur Entnahmestation (11) auszuüben, und um den Klemmrahmen (23) im Verhältnis zum mittleren Rahmen (17) zu bewegen, um die vorspringenden Kanten (27) der geformten räumlichen Objekte (3) in der Entnahmestation (11) freizugeben.

11. Vorrichtung nach einem der Ansprüche 8 bis 10, wobei die Transportbahn (7) einen durchgehenden Pfad formt und wobei die sich Zuführstation (6) für die Folien (2) und die Entnahmestation (11) für die geformten Objekte (3) nebeneinander befinden.

12. Vorrichtung nach Anspruch 11, wobei der Pfad eine kreisförmige Bahn ist und die Transportbahn (7) als Verteilerband konfiguriert ist.

## Revendications

1. Procédé pour thermoformer simultanément en continu une pluralité de feuilles en plastique individuelles (2) dans des moules (10) pour former un nombre identique d'objets spatiaux individuels (3), le procédé comprenant :
- le ramassage simultané de ladite pluralité de feuilles (2), chacune à partir de sa pile de feuilles individuelles (5) située dans une station d'alimentation (6) à proximité d'un côté admission d'un rail de transport (7) et le dépôt de ladite pluralité de feuilles (2) sur un support commun (12) situé sur ledit rail de transport (7) ;
- le passage simultané de ladite pluralité de feuilles (2) sur le support (12) depuis la station d'alimentation (6) par au moins une station de chauffage (8), une station de moulage (9), et une station de retrait (11) ;
- le chauffage des feuilles (2) sur le support (12) dans l'au moins une station de chauffage (8) ;
- la déformation thermique des feuilles (2) sur ledit support (12) dans la station de moulage (9) de manière à former une pluralité d'objets spatiaux (3) ;
- le retrait simultané de la pluralité d'objets spatiaux formés (3) dudit support (12) dans la station de retrait (11) ;
- le transfert du cadre supérieur (16) du support (12) de la station de retrait (11) à la station d'alimentation (6) ;
- moyennant quoi un nouveau cycle de moulage débute pour des séries successives d'une pluralité de feuilles individuelles (2) dans leur support (12) après que ledit support (12) a été transféré de la station de retrait (11) à la station d'alimentation (6) ;
**caractérisé en ce que** :
- chacun des supports communs (12) comprend un cadre intermédiaire (17) et un cadre supérieur (16), et qui peut être temporairement couplé au ou désaccouplé du cadre intermédiaire (17), le cadre intermédiaire (17) étant adapté pour supporter les feuilles (2) à placer sur celui-ci avec leurs bords externes (13), le cadre supérieur (16) étant adapté pour serrer ladite pluralité de feuilles (2) entre ledit cadre intermédiaire (17) et ledit cadre supérieur (16) au moyen de moyens de serrage (18, 23, 24, 25) ;
- chaque support (12) comprend en outre une pluralité de broches de serrage transversales (18) et un cadre de serrage (23) qui est analogue audit cadre intermédiaire (16) et présente des ouvertures allongées (22) et des lèvres saillantes (25) à proximité des bords desdites ouvertures (22), et dans lequel le cadre intermédiaire (17) comprend des trous appropriés (21) pour recevoir lesdites broches de serrage (18) ;
et **en ce que** le procédé comprend en outre les étapes suivantes :
- le positionnement du cadre supérieur (16) au-dessus du cadre intermédiaire (17) et le prolongement desdites broches de serrage (18) sur le cadre supérieur (16) dans les trous (21) du cadre intermédiaire (17) et dans les ouvertures allongées (22) du cadre de serrage (23) pour ajuster le cadre de serrage (23) contre un côté inférieur dudit cadre intermédiaire (17) ;
- le déplacement latéral du cadre de serrage (23) du support (12) dans la station d'alimentation (6) de sorte que pendant ce déplacement, une tension appropriée des lèvres (25) se produise afin de serrer fermement les bords (13) des feuilles (2) ;
- le déplacement latéral du cadre de serrage (23) du support (12) dans la station de retrait (11), de sorte que pendant ce déplacement, un relâchement des lèvres (25) se produise afin de relâcher les bords (27) de l'objet moulé (3).

2. Procédé selon la revendication 1, dans lequel l'alimentation en feuilles (2) pour un nouveau cycle dans la station d'alimentation (6) se produit pratiquement simultanément avec le retrait des objets formés (3) du cycle précédent dans la station de retrait (11) qui est située à proximité de la station d'alimentation (6).

3. Procédé selon la revendication 1 ou 2, dans lequel l'alimentation simultanée en pluralité de feuilles (2) se déroule depuis le dessus de chaque pile de feuilles individuelles (5).

4. Procédé selon l'une quelconque des revendications précédentes, dans lequel, dans chaque station de chauffage (8), chaque feuille dans le support commun (12) est chauffée dans une cellule de chauffage individuelle (14) et dans lequel, dans la station de moulage (9), chaque feuille chauffée dans le support (12) est moulée pour former un objet spatial (3) dans son moule individuel (10).

5. Procédé selon l'une quelconque des revendications précédentes, dans lequel les objets formés (3), après avoir été relâchés, sont empilés en une pile par cellules de moulage (15).

6. Procédé selon l'une quelconque des revendications précédentes, dans lequel le support commun (12) avec les objets formés (3) est séparé dans la station de retrait (11) et dans lequel son cadre supérieur (16) avec les objets formés (3) est soulevé de son cadre intermédiaire (17) alors que ledit cadre intermédiaire (17) reste sur le rail de transport (7) et le cadre intermédiaire (17) et le cadre de serrage (23) qui est lié de manière coulissante à celui-ci, passe ensuite à la station d'alimentation (6) afin de répéter le cycle.

7. Procédé selon la revendication 6, dans lequel le cadre supérieur soulevé (16) dépose les objets formés (3) dans la station de retrait (11) et passe ensuite à la station d'alimentation (6) afin de répéter le cycle.

8. Dispositif pour thermoformer simultanément et en continu une pluralité d'objets spatiaux individuels (3), le dispositif comprenant :
- un rail de transport (7) doté d'une pluralité de supports communs (12) déplacée à l'intérieur de celui-ci pour faire passer simultanément une pluralité de feuilles en plastique (2) d'une station d'alimentation (6) par au moins une station de chauffage (8), une station de moulage (9) à une station de retrait (11) ;
- la station d'alimentation (6) étant adaptée pour alimenter simultanément en pluralité de feuilles (2) lesdits supports (12) ;
- l'au moins une station de chauffage (8) étant adaptée pour chauffer les feuilles (2) sur ledit support (12) ;
- la station de moulage (9) comprenant une pluralité de moules (10) pour déformer thermiquement les feuilles (2) sur ledit support (12) en une pluralité d'objets spatiaux (3) ;
- la station de retrait (11) étant adaptée pour retirer simultanément la pluralité d'objets spatiaux formés (3) dudit support (12) ;
- la station d'alimentation (6) comprenant un premier moyen de ramassage (30) pour ramasser simultanément ladite pluralité de feuilles (2), chacune à partir de sa pile de feuilles individuelles (5) située dans la station d'alimentation (6) à proximité d'un côté admission du rail de transport (7) et pour déposer lesdites feuilles ramassées (2) sur un support (12) situé sur ledit rail de transport (7) ;
- dans lequel la station de retrait (11) comprend un second moyen de ramassage (32) pour retirer simultanément les objets moulés (3) du support commun (12) dans la station de retrait ;
- dans lequel le dispositif comprend en outre un moyen (46) pour transférer le cadre supérieur (16) des supports (12) de la station de retrait (11) à la station d'alimentation (6) ;
**caractérisé en ce que**
- chacun des supports communs (12) comprend un cadre intermédiaire (17) et un cadre supérieur (16), et qui peut être temporairement couplé à ou désaccouplé du cadre intermédiaire (17), le cadre intermédiaire (17) étant adapté pour supporter les feuilles (2) à placer sur celui-ci avec leurs bords externes (13), le cadre supérieur (16) étant adapté pour serrer ladite pluralité de feuilles (2) entre ledit cadre intermédiaire (17) et ledit cadre supérieur (16) au moyen de moyens de serrage (18, 23, 24, 25) ;
- chaque support (12) comprend en outre un cadre de serrage (23) qui est analogue audit cadre intermédiaire (17) et présente des ouvertures allongées (22) et des lèvres saillantes (25) à proximité des bords desdites ouvertures (22), et dans lequel le support (12) comprend en outre une pluralité de broches de serrage transversales (18) qui, en utilisation, se prolongent dans des trous appropriés (21) du cadre intermédiaire (17) situé en dessous du cadre supérieur (16) et dans les ouvertures (22) dudit cadre de serrage (23) de sorte que le cadre de serrage (23) soit ajusté contre un côté inférieur dudit cadre intermédiaire (17) et puisse être déplacé latéralement, les broches de serrage (18) présentant des indentations transversales appropriées (24) à proximité de leur côté inférieur pour recevoir les lèvres (25) du cadre de serrage (23) pendant le déplacement latéral du cadre de serrage (23), de sorte que pendant ce déplacement, une tension appropriée des lèvres (25) se produise sur le côté alimentation du rail de transport (7) afin de serrer fermement les bords (13) des feuilles (2), tandis que, pendant le mouvement de retour de celui-ci, un relâchement des lèvres (25) se produit sur le côté retrait afin de relâcher les bords (27) de l'objet moulé (3).

9. Dispositif selon la revendication 8, dans lequel le premier moyen de ramassage (30) et le second moyen de ramassage (32) sont présents pour ramasser les feuilles (2) d'une part, et pour ramasser les objets (3) d'autre part, pratiquement simultanément.

10. Dispositif selon la revendication 8 ou 9, comprenant en outre un moyen de commande (20) adapté pour déplacer le cadre de serrage (23) par rapport au cadre intermédiaire (17) afin d'exercer l'action de serrage sur les bords des feuilles (13) dans le support (2) de la station d'alimentation (6) à la station de retrait (11), et pour déplacer le cadre de serrage (23) par rapport au cadre intermédiaire (17) afin de relâcher les bords saillants (27) des objets spatiaux moulés (3) dans la station de retrait (11).

11. Dispositif selon l'une quelconque des revendications 8 à 10, dans lequel le rail de transport (7) forme un trajet continu et dans lequel la station d'alimentation (6) en feuilles (2) et la station de retrait (11) pour les objets moulés (3) sont situées adjacentes l'une par rapport à l'autre.

12. Dispositif selon la revendication 11, dans lequel le trajet est un rail circulaire et le rail de transport (7) est configuré sous forme de carrousel.
